# EUROPÄISCHE PATENTSCHRIFT

(11) **EP 0 999 944 B1**
(45) Veröffentlichungstag und Bekanntmachung des Hinweises auf die Patenterteilung: **25.09.2002**
(21) Anmeldenummer: 97910277.9
(22) Anmeldetag: 31.07.1997
(51) Int. Cl.: B60H 1/00, F28D 20/02, F01P 5/10

(54) **HEIZUNG ODER KLIMAANLAGE EINES KRAFTFAHRZEUGS**
HEATING AND AIR CONDITIONING IN A VEHICLE
SYSTEME DE CHAUFFAGE OU DE CONDITIONNEMENT D'AIR POUR AUTOMOBILE

(43) Veröffentlichungstag der Anmeldung: 17.05.2000
(73) Patentinhaber: WILO GmbH, D-44263 Dortmund (DE)
(72) Erfinder: GENSTER, Albert, D-45768 Marl (DE); KECH, Hansjürgen, D-58313 Herdecke (DE); SCHMALFUSS, Horst-Georg, D-58540 Meinerzhagen (DE); HUNNEKUHL, Gerhard, D-58452 Witten (DE)
(74) Vertreter: COHAUSZ DAWIDOWICZ HANNIG & PARTNER
(86) Internationale Anmeldenummer: EP9704644
(87) Internationale Veröffentlichungsnummer: WO99006233

(56) Entgegenhaltungen:
- EP-A- 0 276 739
- DE-A- 3 447 182
- PATENT ABSTRACTS OF JAPAN vol. 014, no. 311 (M-0994), 4.Juli 1990 & JP 02 102816 A (NIPPON DENSO CO LTD), 16.April 1990,
- PATENT ABSTRACTS OF JAPAN vol. 017, no. 053 (M-1361), 3.Februar 1993 & JP 04 263787 A (KOBE STEEL LTD), 18.September 1992,

## Beschreibung

Es ist bekannt, im Kühlmittelkreislauf eines Kfz.-Verbrennungsmotors einen Kühler, eine Heizung/Klimaanlage und einen Latentwärmespeicher anzuordnen. Das Kühlmittel wird durch eine Pumpe umgetrieben und im Motorraum des Kraftfahrzeugs, bilden Motor, Kühler, Heizung und Latentwärmespeicher sowie die Pumpe des Kühlmittelkreislaufs getrennte Einheiten, die im Motorraum nacheinander montiert werden.

So ist es aus der gattungsgemäßen DE-A 3 447 182 bekannt, an einer Kraftfahrzeugheizung eine Motorpumpe zu befestigen. Dies bedeutet einen zusätzlichen Montageaufwand. Aus der JP-A-02 102 816 ist es bekannt, einen Latentwärmespeicher in den Kühlkreislauf zu integrieren. Die Integration ist konstruktiv aufwendig.

Aufgabe der Erfindung ist es, Herstellung, Montage und Reparatur, insbesondere auch Austausch der Aggregate eines Kühlmittelkreislaufes zu vereinfachen und preiswerter zu gestalten, wobei auch der Platzbedarf verringert werden soll.

Diese Aufgabe wird erfindungsgemäß dadurch gelöst, daß an der Heizung/Klimaanlage ein Latentwärmespeicher und eine Motorpumpe befestigt sind, die im Kühlwasserkreislauf angeschlossen sind.

Hierdurch bildet die Heizung/Klimaanlage zusammen mit dem Latentwärmespeicher und der das Kühlmittel umwälzenden Motorpumpe eine bauliche Einheit, die Herstellung und Montage wesentlich vereinfacht. Ferner werden Reparaturen erleichtert und es wird wesentlich weniger Platz im Motorraum benötigt.

Besonders vorteilhaft ist es, wenn der Latentwärmespeicher und die Pumpe längs an der Ober-, Unter- und/oder Stirnseite der Heizung/Klimaanlage angeordnet sind. Auch ist konstruktiv und für das Einsparen von Platz von Vorteil, wenn die Pumpe an einer Stirnseite der Heizung/Klimaanlage koaxial befestigt ist.

Besonders vorteilhaft ist es, wenn das Pumpengehäuse auf der dem E-Motor abgewandten Seite eine ebene Anschlußfläche mit Ein- und Auslaß aufweist, mit der die Pumpe an der Heizung/Klimaanlage und/oder dem Latentwärmespeicher befestigt ist. Hierbei kann zwischen Anschlußfläche und Pumpe und/oder Heizung/Klimaanlage eine Scheibe befestigt sein, die eine hydraulische Verteilung und/oder ein Ventil (insbesondere ein Dreiwegeventil) aufweist.

Ein besonders günstiger Einsatz einer Pumpe ist dann gegeben, wenn die Pumpe eine Rohrpumpe ist, deren Laufrad koaxial durchflossen ist. Auch kann der E-Motor der Pumpe einen Magnetläufer aufweisen, wodurch die Pumpe sehr wenig Platz benötigt und scheibenförmig an das benachbarte Aggregat befestigbar ist.

Eine weitere Integration und Verringerung des Platzbedarfs wird erreicht, wenn auf einer Stirnseite der Pumpe und/oder des Latentwärmespeichers ein Gehäuse befestigt ist, das elektronische Bauteile zur Regelung aufweist.

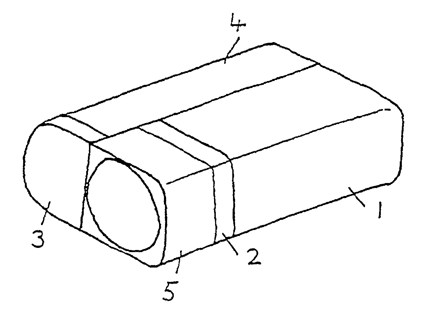

Ein Ausführungsbeispiel der Erfindung ist in der Zeichnung in einer Perspektive dargestellt und wird im folgenden näher beschrieben.

An einer in einem Kühlwasserkreislauf eines Kraftfahrzeugverbrennungsmotors angeschlossenen Heizung/Klimaanlage 1 sind mehrere Aggregate befestigt, die die gesamte Länge der Heizung/Klimaanlage 1 überdecken. Dies können unterschiedliche Aggregate sein, wie ein Latentwärmespeicher 4 und eine Motorpumpe 5. Heizung/Klimaanlage 1, Speicher 4 und Pumpe 5 sind hierbei an denselben Kühlmittelkreislauf des Kraftfahrzeugmotors angeschlossen. Hierbei bilden Heizung/Klimaanlage 1, Latentwärmespeicher 4 und Motorpumpe 5 eine bauliche Einheit, die innerhalb der baulichen Einheit aneinander derart angeschlossen sind, daß sie vom Kühlmittel durchflossen werden.

Die Motorpumpe 5 ist entweder eine Rohrpumpe oder eine Spaltrohrpumpe, deren Pumpengehäuse auf der dem Elektromotor abgewandten Seite eine ebene Anschlußfläche mit Ein- und Auslaß aufweist. Mit dieser Anschlußseite ist die Pumpe an der Heizung/Klimaanlage und/oder dem Latentwärmespeicher befestigt.

Zwischen der Motorpumpe 5 und dem Latentwärmespeicher 4 oder der Heizung/Klimaanlage 1 kann eine scheibenförmige hydraulische Verteilung 2 und/oder ein Ventil, insbesondere ein Dreiwegeventil, befestigt sein, das insbesondere durch eine elektronische Einrichtung 3 gesteuert wird. Die Einrichtung 3 befindet sich innerhalb eines Gehäuses, das die elektronischen Bauteile zur Regelung von Pumpe 5, Heizung/Klimaanlage 1 oder Speicher aufweist und an der Stirnseite der Motorpumpe des Latentwärmespeichers und/oder der Heizung/Klimaanlage 1 befestigt ist.

In weiteren Alternativen kann der Motor der Motorpumpe 5 einen Magnetläufer aufweisen, wodurch die Motorpumpe eine besonders geringe axiale Länge besitzt. Ferner kann die Motorpumpe 5 auch an einer der Stirnseiten des Latentwärmespeichers 4 befestigt sein.

## Patentansprüche

1. Heizung oder Klimaanlage für den Kühlwasserkreislauf eines Kfz.-Verbrennungsmotors, **dadurch gekennzeichnet, daß** an der Heizung/Klimaanlage (1) ein Latentwärmespeicher (4) und eine Motorpumpe (5) befestigt sind, die im Kühlwasserkreislauf angeschlossen sind.

2. Heizung oder Klimaanlage nach Anspruch 1, **da durch gekennzeichnet,** daß Heizung/Klimaanlage (1), Latentwärmespeicher (4) und Pumpe (5) eine bauliche Einheit bilden.

3. Heizung oder Klimaanlage nach Anspruch 1 oder 2, **dadurch gekennzeichnet, daß** der Latentwärmespeicher (4) längs an der Ober-, Unter- oder Stirnseite der Heizung/Klimaanlage (1) angeordnet ist.

4. Heizung oder Klimaanlage nach einem der vorhergehenden Ansprüche, **dadurch gekennzeichnet, daß** die Pumpe (5) an einer Seite insbesondere der Stirnseite des Latentwärmespeichers (4). und/oder der Heizung/Klimaanlage (1) koaxial befestigt ist.

5. Heizung oder Klimaanlage nach einem der vorhergehenden Ansprüche, **dadurch gekennzeichnet,** daß das Pumpengehäuse auf der dem Motor abgewandten Seite eine ebene Anschlußfläche mit Ein- und Auslaß aufweist, mit der die Pumpe (5) an der Heizung/Klimaanlage (1) und/oder dem Latentwärmespeicher (4) befestigt ist.

6. Heizung oder Klimaanlage nach Anspruch 5, **dadurch gekennzeichnet, daß** zwischen Anschlußfläche und Pumpe (5) und/oder Heizung/Klimaanlage (1) eine Scheibe (2) befestigt ist, die eine hydraulische Verteilung und/oder ein Ventil, insbesondere ein Dreiwege-Ventil, aufweist.

7. Heizung oder Klimaanalge nach einem der Ansprüche 1 bis 4, **dadurch gekennzeichnet, daß** die Pumpe (5) eine Rohrpumpe ist, deren Laufrad koaxial durchflossen ist.

8. Heizung oder Klimaanlage nach einem der vorhergehenden Ansprüche, **dadurch gekennzeichnet, daß** der Motor der Pumpe (5) einen Magnetläufer aufweist.

9. Heizung oder Klimaanlage nach einem der vorhergehenden Ansprüche, **dadurch gekennzeichnet, daß** auf einer Stirnseite der Pumpe (5) und/oder des Latentwärmespeichers (4) ein Gehäuse (3) befestigt ist, das elektronische Bauteile zur Regelung aufweist.

## Claims

1. A heater or air conditioning unit for the cooling water circuit of a motor vehicle combustion engine, **characterized in that** a latent heat accumulator (4) and a motor pump (5), which are connected within the cooling water circuit, are mounted to the heater/air conditioning unit (1).

2. A heater or air conditioning unit according to Claim 1, **characterized in that** the heater/air conditioning unit (1), latent heat accumulator (4) and pump (5) form one structural unit.

3. A heater or air conditioning unit according to Claim 1 or 2, **characterized in that** the latent heat accumulator (4) is arranged longitudinally along the upper or lower side or end face of the heater/air conditioning unit (1).

4. A heater or air conditioning unit according to any of the preceding claims, **characterized in that** the pump (5) is mounted coaxially to one side, in particular the end face of the latent heat accumulator (4) and/or the heater/air conditioning unit (1).

5. A heater or air conditioning unit according to any of the preceding claims, **characterized in that** the pump housing comprises on the side facing away from the motor a flat connection face with inlet and outlet, with which the pump (5) is mounted to the heater/air conditioning unit (1) and/or the latent heat accumulator (4).

6. A heater or air conditioning unit according to Claim 5, **characterized in that** between the connection face and pump (5) and/or heater/air conditioning unit (1) is mounted a plate (2) comprising a hydraulic distribution unit and/or a valve, in particular a three-way directional control valve.

7. A heater or air conditioning unit according to any of Claims 1 to 4, **characterized in that** the pump (5) is a tube pump, with fluid flowing coaxially through the impeller of said pump.

8. A heater or air conditioning unit according to any of the preceding claims, **characterized in that** the motor of the pump (5) comprises a magnet rotor.

9. A heater or air conditioning unit according to any of the preceding claims, **characterized in that** on one end face of the pump (5) and/or the latent heat accumulator (4) is mounted a housing (3) comprising the electronic components for control.

## Revendications

1. Un système de chauffage ou de climatisation pour le circuit d'eau de refroidissement d'un moteur à combustion d'un véhicule automobile, **caractérisé en ce qu'**un accumulateur (4) de chaleur latente et une pompe (5) à moteur sont fixés sur le système (1) de chauffage/de climatisation et sont raccordés dans le circuit d'eau de refroidissement.

2. Un système de chauffage ou de climatisation conforme à la revendication n° 1, **caractérisé en ce que** le système (1) de chauffage/de climatisation, l'accumulateur (4) de chaleur latente et la pompe (5) constituent une unité constructive.

3. Un système de chauffage ou de climatisation conforme à la revendication n° 1 ou n° 2, **caractérisé en ce que** l'accumulateur (4) de chaleur latente est disposé le long du côté supérieur ou inférieur ou le long d'une face du système (1) de chauffage/de climatisation.

4. Un système de chauffage ou de climatisation conforme à une des revendications précédentes, **caractérisé en ce que** la pompe (5) est fixée sur un côté, en particulier sur une face et de façon coaxiale, de l'accumulateur (4) de chaleur latente et/ou du système (1) de chauffage/de climatisation.

5. Un système de chauffage ou de climatisation conforme à une des revendications précédentes, **caractérisé en ce que**, sur sa face détournée du moteur, le corps de pompe présente une face de raccordement plane, dotée d'une admission et d'un échappement, par laquelle la pompe (5) est fixée sur le système (1) de chauffage/de climatisation et/ou sur l'accumulateur (4) de chaleur latente.

6. Un système de chauffage ou de climatisation conforme à la revendication n° 5, **caractérisé en ce qu'**entre la face de raccordement et la pompe (5) et/ou le système (1) de chauffage/de climatisation est disposé un disque (2), qui présente une distribution hydraulique et/ou une valve, en particulier une valve à trois voies.

7. Un système de chauffage ou de climatisation conforme à une des revendications n° 1 à n° 4, **caractérisé en ce que** la pompe (5) est une pompe à tuyau, dont la roue d'entraînement est traversée par le fluide dans la direction coaxiale.

8. Un système de chauffage ou de climatisation conforme à une des revendications précédentes, **caractérisé en ce que** le moteur de la pompe (5) présente un balai aimanté.

9. Un système de chauffage ou de climatisation conforme à une des revendications précédentes, **caractérisé en ce que**, sur une face de la pompe (5) et/ou de l'accumulateur (4) de chaleur latente, est fixé un corps (3), qui présente des composantes électroniques dédiées à la régulation.
